(19) Europäisches Patentamt
European Patent Office
Office européen des brevets

(11) EP 3 674 535 A1

(12) EUROPEAN PATENT APPLICATION

(43) Date of publication:
01.07.2020 Bulletin 2020/27

(51) Int Cl.:
F02D 41/00 (2006.01)  F02D 41/14 (2006.01)
F02D 41/24 (2006.01)  F02D 41/22 (2006.01)

(21) Application number: 20158536.1

(22) Date of filing: 16.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 29.11.2016 PCT/US2016/064036
12.10.2017 US 201715782669

(62) Document number(s) of the earlier application(s) in
accordance with Art. 76 EPC:
17202191.7 / 3 327 273

(71) Applicant: Garrett Transportation I Inc.
Torrance, CA 90504 (US)

(72) Inventors:
• PACHNER, Daniel
  Torrance, CA 90504 (US)
• UCHANSKI, Michael
  Torrance, CA 90504 (US)
• LANSKY, Lukas
  Torrance, CA 90504 (US)

(74) Representative: LKGlobal UK Ltd.
Cambridge House, Henry Street
Bath BA1 1BT (GB)

Remarks:
This application was filed on 20-01-2020 as a
divisional application to the application mentioned
under INID code 62.

(54) **AN INFERENTIAL SENSOR**

(57) A system and an approach for determining various pressures or flows in an internal combustion engine, such as a pressure adjacent a recirculation exhaust gas flow through a controlled valve of an engine. Also, among the sensors accommodated in the system, is a pressure sensor sensing a pressure in an intake manifold of the engine.

FIG. 1

# Description

Background

The present disclosure pertains to sensors, engines, and particularly to components related to emissions reduction of the engines.

Summary

The disclosure reveals a system and an approach for determining various flows in an internal combustion engine, such as an amount of recirculation exhaust gas flow through a controlled valve, a fresh air mass flow to an intake of an engine, and a pressure at an inlet of a turbine which may also be the pressure at the inlet of a high pressure exhaust gas recirculation (EGR). The disclosure may reveal a method of how a pressure estimate may be useful for determining mass flow rates and/or intervals containing the determined mass flow rates.

Brief Description of the Drawings

Figure 1 is a diagram of a turbocharged diesel engine;
Figure 2 is a schematic chart depicting an uncertainty interval containing a pressure based on an interval for efficiency compared with a pressure sensor installed on an engine for testing; and
Figure 3 is a diagram of a lambda sensor behavior graph.

Description

The present system and approach may incorporate one or more processors, computers, controllers, user interfaces, wireless and/or wire connections, and/or the like, in an implementation described and/or shown herein.

This description may provide one or more illustrative and specific examples or ways of implementing the present system and approach. There may be numerous other examples or ways of implementing the system and approach.

Aspects of the system or approach may be described in terms of symbols in the drawing. Symbols may have virtually any shape (e.g., a block) and may designate hardware, objects, components, activities, states, steps, procedures, and other items.

The mass flows in the turbocharged combustion engine, particularly the fresh air mass flow and the exhaust gas recirculation (EGR) mass flow, are important control parameters which need to be carefully controlled.

The fresh air mass flow may determine the oxygen availability for the fuel combustion. It may be noted that oxygen unavailability may lead to incomplete combustion and generation of soot particles which may either be observed as tailpipe smoke or which may clog the particulate filter. In combustion engines, both gasoline and diesel, the fresh air flow usually needs to be controlled to a desired ratio to the fuel mass flow.

The EGR mass flow may determine the portion of inert three atomic gases $H_2O$ and $CO_2$ in the gas charged to cylinders. An inert content may dissolve the oxygen and increase the thermal capacity of the charged gas. The increased thermal capacity and lowered oxygen availability of the charged gas may both lead to lower peak temperatures in a cylinder which reduces formation of nitrogen oxides NO and $NO_2$ (i.e., $NO_x$). The mass of these harmful oxides produced by engines may be regulated by emission limits.

Although the mass flows are important control parameters, they may not always be easily measured with a sufficient degree of accuracy, robustness, and reliability. Also a cost of such physical sensors may be considered high. The air mass flow sensors based on principles such as hot-film sensors (HFS), or EGR mass flow sensors based on a Venturi tube principle, can be associated with significant costs, calibration efforts, and reliability issues. It may be therefore practical to calculate the mass flows from other physical quantities which can be measured easier, especially if sensors for those physical quantities are already present in the system because of other control or monitoring functions. It may be noted that the physical flow sensors can either be replaced by the calculated values or the calculated values may be used to improve the physical sensor signal, or may be used to diagnose failures of those physical flow sensors.

The quantities which can be measured accurately and with significantly better reliability than mass flows may be the intake side pressures and temperatures, which are temperatures and pressures between the air intake up to the cylinder. The turbo-speed, and oxygen content, namely, oxygen mole fraction in the exhaust gas may also be measured reliably. It may be noted that measuring pressures and temperatures on the exhaust side may be significantly more difficult due to harsh conditions there that can include high temperatures, pressure pulsations, and combustion products such as water considering that water may freeze in winter, aggressive Sulphur compounds, and deposits of soot and oil residues.

A virtual mass flow sensor may calculate the fresh air mass flow, the EGR mass flow, or both, based on those other physical sensors which may be available easier. These calculations may be based on models of the engine components and equations, which describe how the components are coupled and how they interact.

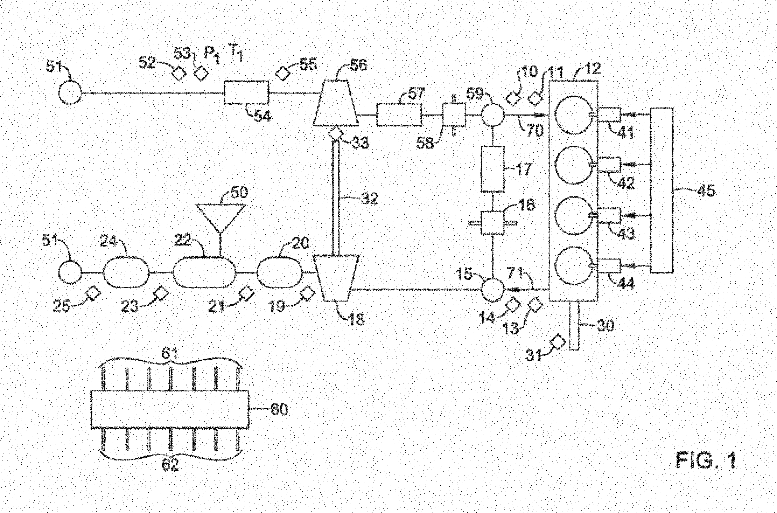

Figure 1 is a diagram of a turbocharged diesel engine. A system of the gas flows in the turbocharged diesel engine with a high pressure EGR valve is shown in the diagram. The diagram shows layout of an internal combustion engine 12 and its peripheral components related to air and fuel supply. Engine 12 may have an intake manifold 70 and an exhaust duct or manifold 71. Intake pressure ($p_2$) and temperature ($T_2$) may be detected with a pressure sensor 10 and a temperature sensor 11, respectively. Exhaust pressure ($p_3$) and temperature ($T_3$) may be detected with a pressure sensor 13 and a temperature sensor 14, respectively. However, most production engines will not necessarily be equipped with sensors 13 and 14 due to a difficulty with sensors placed on the exhaust side.

In operation, air may come in from an ambient environment 51 at an input pressure ($p_1$) and temperature ($T_1$) as indicated by pressure sensor 52 and temperature sensor 53, respectively, positioned before the air filter 54. The air may be compressed by a compressor 56 and flow to a mixing point or plenum 59. Since air becomes hotter when compressed, an engine charge air cooler (CAC) 57 may be used to reduce compressed air temperature. A throttle 58 may be placed downstream of compressor 56 in order to control the pressure in intake manifold 70.

Some exhaust gas may be fed from exhaust manifold 71 through a splitter 15 and through an EGR valve 16 and out of a valve through a cooler 17 to the mixing point or plenum 59 where charged air from the compressor 56 and exhaust gas from EGR valve 16 meet. EGR valve 16 may control an amount of EGR gas to plenum 59. Exhaust gas at an input of EGR valve 16 may have a pressure $p_3$ and a temperature $T_3$. Exhaust gas that is not directed toward EGR valve 16 may go to drive a turbine 18 which turns a shaft 32 at N rotations per unit of time or a rate of angular movement omega ($\omega$) as indicated by a sensor 33. Shaft 32 may drive compressor 56 that outputs the compressed air.

The exhaust gas can pass through a number of after-treatment devices removing harmful compounds. Firstly, the gas may be passing the diesel particulate filter (DPF) 20 to trap soot particles which may be later burned using just the exhaust heat (passive regeneration) or using an extra diesel fuel injector located at the filter inlet (active regeneration). Some diesel engines may also use a diesel oxidation catalyst (DOC, not shown). Then the gas may be treated in a selective catalyst reduction (SCR) device 22 where most of the nitrogen oxides may be converted into harmless diatomic nitrogen using urea injected by the dosing system 50. In order to control the amount of urea used, SCR device 22 may be equipped with inlet and outlet NOx sensors 21 and 23 which may also provide additional information of the oxygen concentration in the exhaust gas. SCR device 22 may use ammonia created from the urea as a reducing agent to reduce the nitrogen oxides. The excess ammonia which may pass unreacted from SCR 22 as a result of urea overdosing may be removed in the ammonia slip catalyst (AMOX) 24.

Engine 12 cylinders may also be a recipient of fuel via a line or tube 45 to fuel injectors 41, 42, 43 and 44. The fuel from injectors 41, 42, 43 and 44 may mix with the air and EGR gas to the cylinders of engine 12 for combustion to move the pistons and turn the crankshaft for a mechanical rotational output at a shaft 30. Engine speed may be measured by a sensor 31 at shaft 30. Other approaches may be used for measuring engine speed. A lambda or oxygen sensor 19 may be situated in an exhaust duct where an exhaust stream may flow such as, for example, after turbine 18, after DPF 20 as sensor 21, after SCR 22 as sensor 23, after AMOX 24 as sensor 25, or there may be several lambda sensors at several locations, simultaneously. The lambda sensor may be combined with a NOx sensor.

Some acronyms that may be used relative to engine aftertreatment technology may incorporate SCR (selective catalytic reduction), SCRF (SCR on filter), DPF (diesel particulate filter), DOC (diesel oxidation catalyst), LNT (lean NOx trap), and PNA (passive NOx adsorber).

The exhaust stream may mean turbine-out, DOC-out, DPF-out, SCR-in, SCR-out, and even tailpipe-out. Though the oxygen content does not necessarily change significantly in the exhaust stream, it may be affected by some of the oxidations in the aftertreatment devices. Exhaust configurations may consist of, for example, turbine-DOC-DPF-SCR and turbine-PNA/LNT/DOC+SCRF+SCR. The lambda or oxygen sensor may be situated virtually anywhere.

A processor 60 may receive inputs 61 from one or more sensors of sensors 52, 53, 33, 10, 11, 13, 14, 19, 21, 23, 25, via wire or wireless connections. An output 62 from processor 60 may be used for controlling EGR valve 16 or for controlling the throttle 58. Other components, such as coolers 57 and 17, variable geometry of turbine 18 or turbine waste gate, and injectors 41, 42, 43 and 44, may be controlled by outputs 62 from processor 60.

An engine configuration, such as the one in Figure 1, together with mathematical models of the individual elements in the configuration, may define a set of equations from which the sought mass flow and/or pressure values can be solved. In particular, the mass conservation law in the engine configuration of Figure 1 may define that the fresh air mass flow equals turbine mass flow minus fuel mass flow, and define that the EGR mass flow equals charged gas flow minus fresh air mass flow.

The equations may hold at any time up to small and negligible dynamic inaccuracies caused by mass accumulation in the intake and exhaust manifolds. It may be noted that from these equations the sought fresh air mass flow and sought EGR mass flow may be calculated indirectly by first calculating the charged gas mass flow $\dot{m}_{ch}$, the turbine mass flow $\dot{m}_t$ and the fuel mass flow $\dot{m}_f$, and calculating the fresh air flow $\dot{m}_a$ and EGR mass flow $\dot{m}_{EGR}$ in a second step. Below are explanations of how fuel, turbine, and charged gas mass flows can be calculated.

Values of a pressure $p_3$ and a temperature $T_3$ at the exhaust duct or manifold 71 may be parameters used to determine the mass flow rates through turbine and through the EGR valve. Estimating $p_3$ may be an important intermediate step in the process. The estimated mass flow rate through the turbine may be used for indirect estimation of the fresh air rate and EGR mass flow rate. The flows in the system may be related by linear equations representing the mass conservation in the engine:

$$\dot{m}_t = \dot{m}_a + \dot{m}_f$$

$$\dot{m}_{ch} = \dot{m}_a + \dot{m}_{EGR}$$

The fresh air and EGR mass flow rates may be estimated indirectly by calculating the turbine mass flow rate $\dot{m}_t$ and the EGR mass flow rates $\dot{m}_{EGR}$ using the turbine and EGR valve flow models and then solving the above equations. The fuel mass flow $\dot{m}_f$ may virtually always be calculated from the fuel injection quantity per cylinder stroke $q_f$ [mg/cyl/stroke], which may be known to the processor 60; also known is engine speed $N_e$ [rpm], and considering a four stroke engine with $N_{cyl}$ cylinders the fuel mass flow [kg/s] may be indicated by:

$$\dot{m}_f = N_{cyl} \frac{10^{-6}}{120} q_f N_e .$$

The charged gas mass flow $\dot{m}_{ch}$[kg/s] may be expressed from engine rotational speed $N_e$[rpm], the engine displacement volume $V_d$[1], the intake manifold pressure $p_2$[kPa] and temperature $T_2$ [K], the specific gas constant of the charged gas $R$[J/kg/K], and the volumetric efficiency parameter $\eta_{vol}$[-] that may be a property of the engine and may depend on engine speed as well as other parameters such as the engine compression ratio, and the exhaust and intake pressures in view of:

$$\dot{m}_{ch} = \frac{1}{120} \eta_{vol}(N_e) V_d \frac{p_2}{T_2 R} N_e .$$

The turbine mass flow $\dot{m}_t$[kg/s] may be calculated from the turbine inlet pressure $p_3$, turbine outlet pressure $p_4$, turbine inlet temperature $T_3$, and turbine speed $N_t$. Some turbines may have control parameters such as variable geometry or a waste gate. The basis for this calculation may be an experimental turbine map $M_t(N_t, p_{30}/p_4)$, which defines the turbine mass flow rate for fixed reference inlet pressure $p_{30}$ and temperature $T_{30}$. Using such turbine map, the turbine mass flow $\dot{m}_t$ may be calculated for any inlet pressure $p_3$ and temperature values $T_3$,

$$\dot{m}_t = M_t \left( N_t \sqrt{T_3 / T_{30}} , p_3 / p_4 \right) p_3 / p_{30} \sqrt{T_{30} / T_3} .$$

The above calculation of $\dot{m}_t$ may require the values $p_3$, $p_4$, $T_3$ which may not be sensed in some cases. However, other similar equations describing the model components can be added to define these values from available signals. The $T_3$ temperature may be estimated modeling the combustion, heat transfer and gas expansion processes in the cylinder. The post turbine pressure $p_4$ may be expressed considering a model of the flow restriction of the post turbine elements. It is virtually always possible to add equations to calculate the rough mass flows from signals known to processor 60. Engines with double stage turbochargers may have two turbines in a cascade. Maps of both turbines may be then used in the calculations.

The EGR mass flow $\dot{m}_{EGR}$ may be calculated from the following orifice equation,

$$\dot{m}_{EGR} = A(u_{EGR}) \frac{p_3}{\sqrt{T_3}} \Psi \left( \frac{p_3}{p_2} \right) [\mathrm{kg/s}]$$

where $\Psi$ is a flow function that can be calibrated for a specific valve used, $p_3, T_3$ is pressure and temperature before the EGR valve in the exhaust duct, $p_2$ is pressure after the EGR valve in the intake manifold, and $u_{AGR}$ is a valve position opening angle or valve opening area.

In some cases, the above calculation of $\dot{m}_t$ may require the values $p_3$, $p_4$, $T_3$ which may not be directly sensed. Modern turbocharged engines may be equipped with a $p_2$ sensor. In some cases, pressure $p_3$ may be calculated. Determining pressure $p_3$ is not necessarily sufficient. The $p_4$, $T_3$ need to be determined as well. However, it may be noted that $T_3$ can be determined from the energy balance and engine efficiency (e.g., based on a combustion model), in a cylinder gas expansion model, and a cylinder wall heat loss model. The pressure $p_4$ may be determined from the models of the post turbine element. However, the turbine flow value will normally be most sensitive to errors in $p_3$. As a result, it may be desirable to determine pressure $p_3$.

An approach for determining pressure $p_3$ may be based on the differential equation of the turbo speed which is the mechanical power balance:

$$\frac{d\omega(t)}{dt} = \frac{P_t(t) - P_c(t)}{J\omega(t)}$$

Here $P_t(t)$[W] is the mechanical power of the turbine, $P_c(t)$[W] is the mechanical power of the compressor, and $\omega(t)$[rad/s] is the angular velocity of the turbocharger with the assumed momentum of inertia $J$[kg.m²].

The mechanical powers of both the turbine and the compressor may depend on pressures, flows, and temperatures around these components. These parameters may be approximated by a reversible isentropic compression formula. The formula may define the power required to compress a mass flow rate $\dot{m}$[kg/s] from pressure $p_1$ and temperature $T_1$ to pressure $p_2$ is:

$$P = c_p \dot{m} T_1 \left[ \left( \frac{p_2}{p_1} \right)^{\frac{1-\gamma}{\gamma}} - 1 \right]$$

Here $c_p$[J/kg/K] is the gas specific heat capacity and $\gamma$ is dimensionless the gas specific heat ratio also known as Poisson constant. Because of the reversibility of the isentropic process, the same power, in theory, may again be recovered when expanding the same mass flow rate from $p_2$ back to $p_1$. Because the real process is not reversible, however, some power may be lost (e.g., more power may be needed and less power is recovered).

The loss may be formally represented by considering compressor efficiency parameter $\eta_c$ and turbine efficiency parameter $\eta_t$. Both correction factors may be between zero and one and the normal values range between 0.2 and 0.8 depending on the turbocharger operating point (turbine speed, pressure ratios, and mass flows rates). These efficiencies (e.g., correction factors) may be determined experimentally by running the turbocharger on a gas stand in a number of points. The powers of compressor and turbine may be expressed:

$$P_c(t) = \frac{1}{\eta_c} c_{p,a} \dot{m}_a T_a \left[ \left( \frac{p_0}{p_1} \right)^{\frac{1-\gamma_a}{\gamma_a}} - 1 \right]$$

$$P_t(t) = \eta_t c_{p,e} \left( \dot{m}_a + \dot{m}_f \right) T_3 \left[ \left( \frac{p_3}{p_4} \right)^{\frac{1-\gamma_e}{\gamma_e}} - 1 \right]$$

Here, $p_0$ is an ambient pressure. Note that neither the specific heats $c_{p,a}, c_{p,e}$ nor Poisson constants $\gamma_a, \gamma_e$ for the compressor power $P_c$ and turbine power $P_t$ are the same values because the gas compositions are different. The gas composition for the compressor may be fresh air for the compressor and gas composition for the turbine may be exhaust gas (e.g., combustion products). Considering the compressor outlet pressure $p_1$ may be sensed (e.g., the engine does not have a throttle), or can be calculated from the sensed boost pressure $p_2$ subtracting the pressure drop over a throttle, the above equations can be used to solve for $p_3$ simultaneously with the flows.

When determining the pressure $p_3$, the temperature $T_3$ may be calculated before $p_3$, so it can be prepared before $p_3$ is solved. Further, although the unknown mass flow $\dot{m}_a$ appears in the above mechanical power balance equation, one can note that both compressor and turbine powers are multiplied by $\dot{m}_a$ and $\dot{m}_a + \dot{m}_f$

respectively. These values may be similar. It may be noted that $\dot{m}_f$ is at least 14.7 or 14.5 times smaller than $\dot{m}_a$ because it is the stoichiometric mass ratio of the gasoline and diesel fuels respectively. The unknown flow gets almost cancelled. Therefore the simultaneous solution of $\dot{m}_a$ and $p_3$ may be obtained by a rapidly converging iterative method. Although a simultaneous estimation of the throttle pressure drop and $p_4$ may make the solution more complicated, the principles may remain the same.

The above approach may be described as calculating $p_3$ which generates sufficient power to achieve the sensed boost pressure considering the turbine inlet temperature $T_3$, turbine and compressor efficiencies, turbocharger rotational speed $\omega(t)$, and turbine acceleration $d\omega(t)/dt$. For this reason, the above calculations may be used conveniently in connection with a physical turbo speed sensor installed on the engine. It may be noted that the turbo speed sensors may be very accurate and the signal allows for direct calculation of the acceleration using, for example, a filtered derivative (e.g., a time derivative) of the signal. Using such an estimate of the turbocharger acceleration, the $p_3$ may be correctly calculated even during significantly transient operation of the turbocharger.

When multiplying the mechanical power balance equation with $\eta_t$, it may become apparent that steady-state $p_3$ may depend almost exclusively on the product $\eta_t \eta_c$, not on the individual efficiencies independently. In fact, there is a marginal dependency on $\eta_c$ through $T_3$ because compressor efficiency slightly affects temperatures. However this may be neglected with very little impact. The main uncertain parameter in the equation may, thus, be the product $\eta_{tc} = \eta_t \eta_c$. The product represents the mechanical efficiency of the turbocharger as a whole, without distinguishing both components.

The approach may account for the uncertainty of $\eta_{tc}$. Both of the compressor and the turbine may have high efficiencies at an area of operating points, known as Efficiency Island. The efficiency may rapidly fall to zero on a border of the Efficiency Island. The estimated efficiency of the turbocharger is easier when both of the compressor and the turbine are in the Efficiency Islands, where the efficiency may be flat and almost constant. This is a general property of a smooth functions close to extreme points. On the border, off the peak efficiency, (e.g., the estimation of the actual turbocharger efficiency) may be problematic because the efficiency may be sensitive to actual turbo speed, output/input pressure ratios, or the mass flow rates. The $p_3$ estimate can thus be represented as an interval in which the actual $p_3$ may be contained, and the width of the interval may be based on the interval containing the true efficiency. This interval may be based on the turbine and the compressor efficiency maps and may account for various uncertainties and aging effects: the efficiency of a new turbocharger may be generally higher than the actual turbocharger in the vehicle.

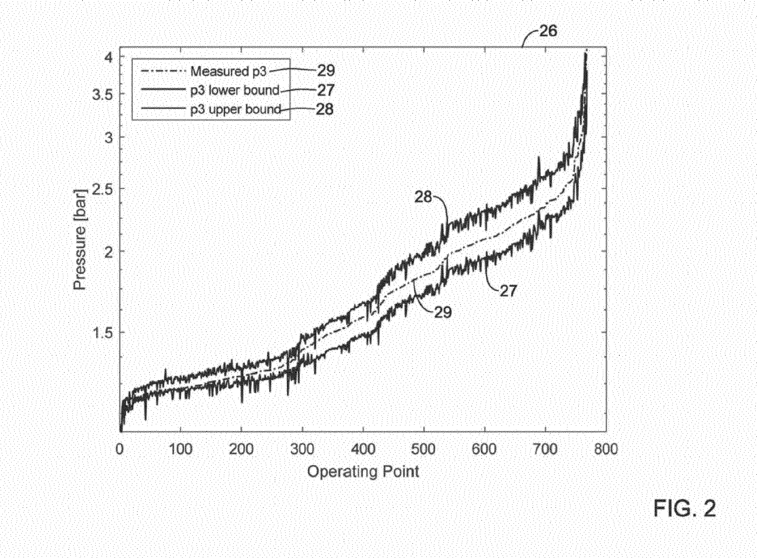

Figure 2 is a schematic chart 26 depicting an

uncertainty interval containing $p_3$ based on an interval for the efficiency compared with $p_3$ sensor installed on an engine for testing, where steady state data was sorted according to $p_3$. That is, Figure 2 compares an estimated $p_3$ 29 with a $p_3$ interval represented by an estimated upper 28 and an estimated lower bound 27 derived from efficiency bounds. The lower $p_3$ bound 27 may provide the maximum turbocharger efficiency and the upper $p_3$ bound 28 may provide minimum turbocharger efficiency. Because the turbocharger efficiency cannot be higher than 1.0, the lower $p_3$ bound 27 may be reliable. It is possible to trust with a high degree of confidence that the true $p_3$ cannot be lower than the lower bound 27. The confidence in the upper bound 28 may be lower than the confidence in the lower bound 27 because the natural lower bound 27 on the turbocharger efficiency $\eta_{tc} > 0$ may lead to a useless bound on the pressure $p_3$, such as $p_3 < \infty$.

In some cases, it may be more difficult to find a realistic lower bound 27 for the efficiency than the upper bound 28. For example, the efficiency may not be higher than the peak efficiency of a new turbocharger of a given type.

Using the lower bound 27 on $p_3$, a lower bound on $\dot{m}_{EGR}$ may be derived using the valve flow model. At the same time, the lower bound on $\dot{m}_t$ can be derived using the turbine flow model. When combining this information together with the mass conservations equations, one gets both upper and lower bounds both based on the upper limit on the turbocharger efficiency:

$$\dot{m}_{EGR} > \dot{m}_{EGR,Low}$$

$$\dot{m}_{EGR} < \dot{m}_{ch} - \dot{m}_{t,Low} + \dot{m}_f$$

In some cases, the approach may include using the EGR valve flow model and the turbine flow model, both lower and upper bounds on EGR mass flow rate may be derived from just an upper bound on the turbocharger efficiency, which may be reliably set or determined. It may be noted that the same may hold for upper and lower bounds on the fresh air flow rate which can also be derived from just an upper bound on the turbocharger efficiency:

$$\dot{m}_a < \dot{m}_{ch} - \dot{m}_{EGR,Low}$$

$$\dot{m}_a > \dot{m}_{t,Low} - \dot{m}_f$$

It may be noted that just a one sided constraint on turbocharger efficiency may lead to two sided constraints on the unknown flows.

Further, the approach may include calculating the fresh air mass flow and/or the EGR mass flow utilizing the calculated fuel mass flow and the charge mass flow in view of on the mass conservation in the engine. The fact that EGR mass flow is both an input and output to these calculations is not necessarily contradictory. The EGR valve mass flow value defined by the valve characteristics may be corrected and made more accurate in the process when the mutual correlations between the flows are used.

The calculation may result in "fast" but possible offset estimates based on the model. A fast estimate means that there is no noticeable delay in the flow estimates relative to the true flow value. At the same time, the flow estimates may often be offset because the turbine characteristics, volumetric efficiency and valve flow function or valve cross section, as well as other properties, are never known accurately, and they may be subject to random changes or drifts during the vehicle life.

One distinctive feature of the present system may be how a lambda sensor is used to remove the offset from "fast" mass flow estimates that are based on a turbine model, EGR valve model, and engine volumetric efficiency model, and possibly other models. A lambda sensor, virtually located anywhere in the exhaust gas stream, may be used to correct the flow estimates reducing the offset. The lambda sensors may sense the oxygen mole fraction $O_2$ (e.g., oxygen content of exhaust gas) which is related to the fresh air mass flow and fuel mass flow. An exact relationship depends on the fuel composition and specific air humidity $H_s$ (water mass fraction in the air). As an example, the following relationship may be derived for fuel composition $C_{22}H_{23}$,

$$\dot{m}_a = \frac{\dot{m}_f(3.065 + 0.992 O_2)}{0.21(1 - H_s) - O_2(1 + 0.602 H_s)}.$$

The above equation may define a way in how the fresh air mass flow $\dot{m}_a$ can be calculated from the lambda sensor; or from exhaust gas $O_2$ mole fraction, which was calculated from a lambda sensor output. However, it may be noted that such calculation may lead to a poor air flow estimate in numerous situations for the following reasons: 1) The lambda sensor output may be unavailable until it reaches sufficient temperature; 2) The denominator of the above formula is small and approaching zero for oxygen mole fractions close to 0.21 (that of dry fresh air), and the result of division may then have a very large relative error due to usually not accurately known, or completely unknown, air humidity and due to small but nonzero lambda sensor error; 3) The lambda sensor placed between or after the aftertreatment devices may further increase the error because being affected by oxidation reactions in the devices such as soot oxidation in the DPF; and 4) The lambda sensor can have significant delay up to 3 seconds and the $\dot{m}_a$ calculations may thus not be necessarily accurate during non-steady state operation of the engine. For these reasons, the $\dot{m}_a$ usually cannot be calculated from lambda directly at least when any of the above items (1-4) may play a role or when the lambda sensor is a low grade slow sensor.

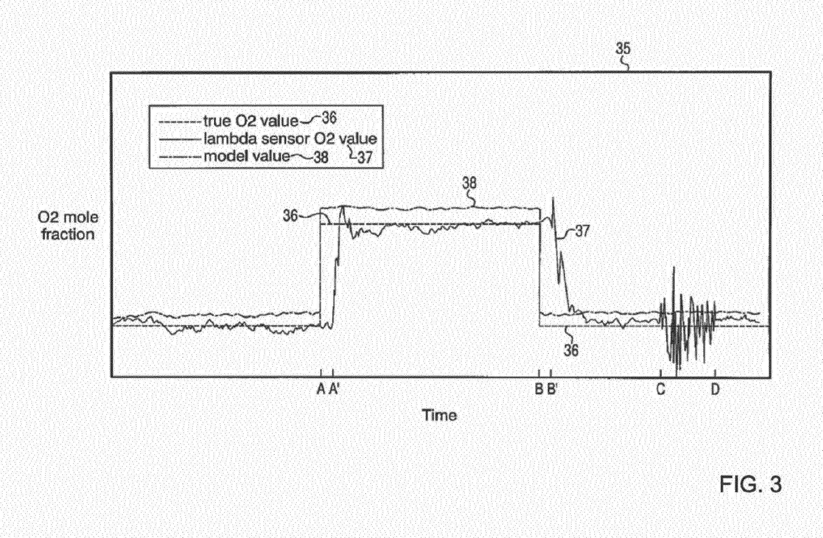

Figure 3 is a diagram of a lambda sensor behavior graph 35. A possible behavior of the $O_2$ mole fraction derived from lambda sensor signal 37 compared to the theoretical true $O_2$ value 36 and also value 38 calculated from the model equations is in graph 35. It may be noted that when the true $O_2$ value 36 changes at point A or B, the model may be able to predict the change without noticeable delay. However, the model predicted value 38 may be slightly offset for reasons explained before. The $O_2$ value 37 derived from the lambda signal will usually not be offset, or at least the offset will be smaller. However, it may take the lambda sensor (value 37) some time, A-A' or B-B', to reach the true $O_2$ value 36. Also, lambda sensor signal 37 may be noisy and difficult to interpret during transient periods between A-A' and B-B'. Moreover, lambda signal 37 may be affected by other processes, e.g., soot oxidations, and signal 37 may be sometimes temporarily inaccurate like between C and D.

A particular feature of the disclosure is an approach of calculating the theoretical "fast" lambda value 38 from the fuel mass flow, EGR mass flow and turbine mass flow estimates, which are not delayed but may be possibly offset. A lambda value 37 (having a dynamic delay) may be considered in a correction of flow estimates. The correction may slowly adjust the EGR valve and turbine model parameters to match the sensed lambda during more or less steady operation of the engine. The correction may be stronger or correction process may be faster when the lambda sensor operates in the favorable conditions and the lambda signal is steady. The correction may be almost none when the lambda sensor possibly operates in unfavorable conditions or during a transient. The correction may be based on calculated sensitivities of the lambda with respect to the adjusted parameters. This sensitivity calculation may involve lambda sensor model, including a dynamic model of the sensor delay, such as lambda sensor time constant and dead time. The correction process may be disengaged during periods of time the lambda not available, e.g., because the lambda sensor has not yet reached the working temperature after a cold start. It may be noted that the disclosed approach may still be providing valid flow estimates although the offset may not be fully corrected during these periods. Also considered in the correction may be a relationship between an $O_2$ mole fraction (i.e., a quantity sensed by the lambda sensor) and the air and fuel flows, and how this relationship may be affected by possibly uncertain air humidity.

Various approaches may be noted in the following text. An estimation approach may incorporate calculating fast but possibly offset EGR and air flow estimates using an intake manifold pressure sensor, and temperature sensors if available, turbocharger-speed sensor if available, as well as other available sensors, and finally correcting the offset of these estimates using a lambda sensor signal.

By fast but possibly offset estimates may mean that the flow estimates do not necessarily have any noticeable delay with respect to the true flows but they can be offset systematically because of parameter variations during a vehicle lifetime such as, for example, slow changes in the valve characteristics caused by fouling or soot deposits, or degradation of the turbocharger efficiency. By using the lambda signal, the offset may be removed.

An estimation approach may incorporate calculating fast but possibly an offset EGR and air flows combining EGR valve and turbine(s) plus post turbine elements (e.g., after-treatment) mass flow models based on sensed or estimated inlet conditions $p_3$ and $T_3$, and making use of a turbo-speed sensor 33 if such turbo-speed sensor is available, which may parameterize the turbine mass flow model. For engines with two or more turbines, the approach may be generalized by treating the cascade of turbines almost as the single turbine.

An estimation approach may incorporate calculating fast but possibly offset EGR and air flows by combining the EGR valve and turbine(s) plus post turbine elements (e.g., after-treatment) mass flow models where the relative contributions of the EGR valve and turbine(s) plus post turbine elements flow models are changed dynamically reflecting a variability of the accuracies of the flow models which may depend on current pressure ratios. An approach may incorporate estimating $T_3$ using a simplified combustion process model and estimating $p_3$ using a turbocharger model.

An estimation approach may combine a dynamically correct (fast) but possibly offset EGR and air flow estimates with a lambda signal to remove the steady-state offset during periods of time lambda signal is healthy and making use of low frequency component of the lambda signal instead of converting the lambda signal to the air mass flow directly.

An approach may incorporate combining the fast but possibly offset flow estimates with a slow lambda signal using a lambda sensor dynamic model (e.g., a transfer function modelling the lambda sensor dynamics, sensor time constant or interval for an unknown or randomly varying sensor time constant, and sensor dead time, or interval for unknown or randomly varying sensor dead time, or similar statistical, probabilistic, or interval sensor models).

An approach may incorporate adjusting the turbine efficiency, EGR valve flow functions, or other model properties to match the $O_2$ mole fraction sensed by lambda sensor in a steady-state.

A lambda sensor in the noted approaches of the present system may have performance specifications of delay ranging between 1 and 3 seconds depending on the flow velocity and gas parameters, and accuracy often worse than 2 percent. A greater part of the sensor inaccuracy may not necessarily be a property of the lambda sensor but due to additional processes in the system in the aftertreatment. The lambda sensors located in the aftertreatment may be partly affected by chemical reactions in the aftertreatment, some of which may change the oxygen mole fraction to certain degree. This may further decrease the accuracy of the air flow calculation from these sensors. Such a signal may be regarded as poor compared to many typical lambda sensors which may have performance accuracy specifications 2 percent or better. Although such lambda signals may be inappropriate for direct conversion to the air mass flow signal, they may be used to adjust the uncertain or drifting model parameters. Such lambdas located in the in the aftertreatment may be a quite inexpensive solution for the purpose of inferential sensing because they may already be installed for the purposes of aftertreatment control, e.g., urea dosing control, and they may be reused by the inferential sensor.

A distinctive feature of the proposed inferential sensing approach may use the lambda signal for a purpose of model parameters adaptations, e.g., to detect random changes in the system parameters over the vehicle lifetime. At the same time, lambda is not necessarily used to calculate the air flow directly. Therefore, the $O_2$ sensing sensors which would not be suitable for such conversion due to large dynamic delay may still be used.

Lambda may be a part of the $NO_x$ sensor. By further noting that the lambda signal has a lag, one may distinguish the present system from other systems on this characteristic, which may use lambda, and may calculate the fresh air flow from lambda directly using known correlations between lambda, air flow, and fuel mass flow. The present system may challenge a use of laggy lambda signals. Laggy signals of an instrument or detector may lag in that they are slow in revealing or indicating a parameter, characteristic, property, or the like being detected, measured, indicated, and/or so forth. Time delays typically encountered when using the lambda in the $NO_x$ sensor may range from 1 to 3 seconds, and the delays may vary depending on the conditions in the exhaust system and may be thus better characterized as intervals of delays or probability of delay values. Furthermore, a lambda sensor signal from an aftertreatment may not necessarily only be delayed but it may simply be almost random during a heavily transient operation. An advantage of the subject lambda is low cost and an easy adaption of the lambda to the inferential determination of EGR mass flow in the present system and approach.

To recap, an inferential exhaust manifold pressure detection device may incorporate an exhaust gas recirculation (EGR) valve having a first input, an output and a second input, an exhaust manifold of an engine having an output connected to the first input of the EGR valve and to an input of a turbine, and having an input connected to exhaust ports of cylinders of the engine, an intake manifold of the engine having an input connected to the output of the EGR valve and to an output of a compressor, and an output connected to intake ports of the cylinders, a pressure sensor situated in the intake manifold, and a processor having an input connected to the pressure sensor and an output. The processor may calculate an inlet pressure of the EGR valve based on a pressure from the pressure sensor. Further, the processor determines a control signal for the EGR valve based on the calculated inlet pressure of the EGR and outputs the control signal to the EGR valve.

The processor may derive the calculated EGR valve inlet pressure using a turbine power versus compressor power balance in view of an efficiency of the turbine and an efficiency of the compressor.

The processor may determine the compressor power balance based on a turbocharger angular velocity signal from a physical turbo speed sensor. Further, the processor may derive a power of a turbocharger acceleration from a time derivative of the turbocharger angular velocity signal.

The processor may calculate the inlet pressure of the EGR valve as an interval of possible values based on intervals of turbocharger efficiency.

The intervals of turbocharger efficiency may be a product of a compressor efficiency and a turbine efficiency and the processor may determine a maximum value of the product by finding a maximum value in the turbocharger map.

The processor may calculate a lower bound for the inlet pressure of the EGR valve based on a maximum possible turbocharger efficiency.

The processor may use the lower bound for the inlet pressure of the EGR valve to calculate an interval containing a fresh air mass flow rate and an interval containing an EGR mass flow rate.

The processor may detect an EGR valve blockage based on an upper bound on an EGR mass flow rate when determining that the EGR mass flow rate is not sufficient for a given valve opening angle.

The processor may detect an intake system air leakage based on a lower bound on a fresh mass flow rate when determining the fresh mass flow rate.

The processor may detect one or both of an EGR valve failure and an intake air leakage failure when a turbocharger efficiency is in an Efficiency Island.

The processor may be blocked from detecting an EGR valve failure and an intake air leakage failure when the turbocharger efficiency is outside of the Efficiency Island.

An inferential mechanism for determining pressure in an exhaust manifold may incorporate an exhaust manifold having a first input connected to an exhaust of an engine and having an output, an exhaust gas recirculation (EGR) valve having a first input connected to the output of the exhaust manifold and an output, an intake manifold of the engine having an input connected to the output of the EGR valve and an output, a pressure sensor situated in the intake manifold, a processor having an input connected to the pressure sensor and an output. The processor may calculate an inlet pressure of the EGR valve based on a pressure from the pressure sensor. Further, the processor may determine a control signal for the EGR valve based on the calculated inlet pressure of the EGR valve and outputs the control signal to the EGR valve.

The processor may derive the calculated EGR valve inlet pressure using a turbine power versus compressor power balance in view of an efficiency of a turbine connected to the output of the exhaust manifold and an efficiency of a compressor connected to the input of the intake manifold. The processor may determine a compressor power balance based on a turbocharger angular velocity signal from a physical turbo speed sensor. Further, the processor may derive a power of a turbocharger acceleration from a time derivative of the turbocharger angular velocity signal.

The processor may calculate the inlet pressure of the EGR valve as an interval of possible values based on intervals of turbocharger efficiency.

The processor may calculate a lower bound for the inlet pressure of the EGR valve based on a maximum possible turbocharger efficiency.

The processor may use the lower bound for the inlet pressure of the EGR valve to calculate an interval containing a fresh air mass flow rate and an interval containing an EGR mass flow rate.

The processor may detect an EGR valve blockage based on an upper bound on an EGR mass flow rate when determining that the EGR mass flow rate is not sufficient for a given valve opening angle.

The processor may detect an intake system air leakage based on a lower bound on a fresh mass flow rate when determining the fresh mass flow rate.

An approach for inferring a pressure at an exhaust manifold of an engine having a turbocharger may incorporate detecting a pressure in an intake manifold connected to an engine, calculating an inlet pressure of an exhaust manifold connected to the engine based on the detected pressure in the intake manifold and a turbine power versus compressor power balance, determining a control signal for an exhaust gas recirculation (EGR) valve based on the calculated inlet pressure in the exhaust manifold, and outputting the control signal for the EGR valve to the EGR valve.

The approach may include the inlet pressure of the exhaust manifold being calculated as an interval of possible values based on intervals of turbocharger efficiency.

Any publication or patent document noted herein is hereby incorporated by reference to the same extent as if each publication or patent document was specifically and individually indicated to be incorporated by reference.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

The following numbered statements also form part of the present disclosure:

1. An inferential exhaust manifold pressure detection device comprising:

an exhaust gas recirculation (EGR) valve having a first input, an output and a second input;
an exhaust manifold of an engine having an output connected to the first input of the EGR valve and to an input of a turbine, and having an input connected to exhaust ports of cylinders of the engine;
an intake manifold of the engine having an input connected to the output of the EGR valve and to an output of a compressor, and an output connected to intake ports of the cylinders;
a pressure sensor situated in the intake manifold;
and a processor having an input connected to the pressure
sensor and an output; and
wherein:

the processor calculates an inlet pressure of the EGR valve based on a pressure from the pressure sensor; and
the processor determines a control signal for the EGR valve based on the calculated inlet pressure of the EGR and outputs the control signal to the EGR valve.

2. The device of 1, wherein the processor derives the calculated EGR valve inlet pressure using a turbine power versus compressor power balance in view of an efficiency of the turbine and an efficiency of the compressor.

3. The device of 2, wherein the processor:

determines the compressor power balance based on a turbocharger angular velocity signal from a physical turbo speed sensor; and
derives a power of a turbocharger acceleration from a time derivative of the turbocharger angular velocity signal.

4. The device of 1, wherein the processor calculates the inlet pressure of the EGR valve as an interval of possible values based on intervals of turbocharger efficiency.

5. The device of 4, wherein the intervals of turbocharger efficiency are a product of a compressor efficiency and a turbine efficiency and the processor determines a maximum value of the product by finding a maximum value in the turbocharger map.

6. The device of 1, wherein the processor calculates a lower bound for the inlet pressure of the EGR valve based on a maximum possible turbocharger efficiency.

7. The device of 6, wherein the processor uses the lower bound for the inlet pressure of the EGR valve to calculate an interval containing a fresh air mass flow rate and an interval containing an EGR mass flow rate.

8. The device of 1, wherein the processor detects an EGR valve blockage based on an upper bound for an EGR mass flow rate when determining that the EGR mass flow rate is not sufficient for a given valve opening angle.

9. The device of 1, wherein the processor detects an intake system air leakage based on a lower bound on a fresh mass flow rate when determining the fresh mass flow rate.

10. The device of 1, wherein the processor detects one or both of an EGR valve failure and an intake air leakage failure when a turbocharger efficiency is in an Efficiency Island.

11. The device of 10, wherein the processor is blocked from detecting an EGR valve failure and an intake air leakage failure when the turbocharger efficiency is outside of the Efficiency Island.

12. An inferential mechanism for determining pressure in an exhaust manifold an engine having a turbocharger comprising:

an exhaust manifold having a first input connected to an exhaust of an engine and having an output;
an exhaust gas recirculation (EGR) valve having a first input connected to the output of the exhaust manifold and having an output;
an intake manifold of the engine having an input connected to the output of the EGR valve and having an output;
a pressure sensor situated in the intake manifold;
and a processor having an input connected to the pressure
sensor and having an output; and
wherein the processor:

calculates a lower bound for an inlet pressure of the EGR valve based on a maximum possible turbocharger efficiency;
uses the lower bound for the inlet pressure of the EGR valve to calculate an interval containing a fresh air mass flow rate;
detects a fuel injection offset using the interval on a fresh air mass flow rate; and
determines a control signal to adjust fuel injection in view of the fuel injection offset and outputs the control signal to a fuel injector.

13. The mechanism of 12, further comprising:

a lambda sensor having an output connected to the input of the processor; and
wherein the processor detects the fuel injection offset using the interval on a fresh air mass flow rate by comparing the interval on a fresh air mass flow rate with an interval on a fresh air mass flow rate derived from a lambda sensor.

14. The mechanism of 12, further comprising:

a fresh air mass flow rate physical sensor having an output connected to the input of the processor; and
wherein the processor detects a fresh air mass flow rate physical sensor offset by comparing the interval on a fresh air mass flow rate sensed with a fresh air mass flow rate physical sensor.

15. The mechanism of 12, wherein the processor:

calculates an inlet pressure of the EGR valve based on a pressure from the pressure sensor; and
determines a control signal for the EGR valve based on the calculated inlet pressure of the EGR and outputs the control signal to the EGR valve.

16. The mechanism of 15, wherein the processor: derives

the calculated EGR valve inlet pressure using a turbine versus compressor power balance in view of an efficiency of a turbine connected to the output of the exhaust manifold and an efficiency of a compressor connected to the input of the intake manifold;
determines a compressor power balance based on a turbocharger angular velocity signal from a physical turbo speed sensor; and
derives a power of a turbocharger acceleration from a time derivative of the turbocharger angular velocity signal.

17. The mechanism of 15. wherein the processor calculates the inlet pressure of the EGR valve as an interval of possible values based on intervals of turbocharger efficiency.

18. The mechanism of 15, wherein the processor detects an EGR valve blockage based on an upper bound on an EGR mass flow rate when determining that the EGR mass flow rate is not sufficient for a given valve opening angle.

19. A method for inferring a pressure at an exhaust manifold of an engine having a turbocharger, the method comprising:

detecting a pressure in an intake manifold connected to an engine;
calculating an inlet pressure of an exhaust manifold connected to the engine based on the detected pressure in the intake manifold and a turbine power versus compressor power balance;
determining a control signal for an exhaust gas recirculation (EGR) valve based on the calculated inlet pressure in the exhaust manifold; and
outputting the control signal for the EGR valve to the EGR valve.

20. The method of 19, wherein the inlet pressure of the exhaust manifold is calculated as an interval of possible values based on intervals of turbocharger efficiency.

**Claims**

1.  An inferential mechanism for determining pressure in an exhaust manifold an engine having a turbocharger comprising:

an exhaust manifold having a first input connected to an exhaust of an engine and having an output;
an exhaust gas recirculation (EGR) valve having a first input connected to the output of the exhaust manifold and having an output;
an intake manifold of the engine having an input connected to the output of the EGR valve and having an output;
a pressure sensor situated in the intake manifold; and
a processor having an input connected to the pressure sensor and having an output; and
wherein the processor:

calculates a bound for an inlet pressure of the EGR valve based on a maximum possible turbocharger efficiency;
uses the bound for the inlet pressure of the EGR valve to calculate an interval containing a fresh air mass flow rate;

detects a fuel injection offset using the interval on a fresh air mass flow rate; and
outputs a control signal to a fuel injector, the control signal is configured to adjust fuel injection in view of the fuel injection offset.

2.  The inferential mechanism of claim 1, wherein the bound calculated for the inlet pressure of the EGR valve is a lower bound.

3.  The inferential mechanism of claim 1 or 2, further comprising:

a lambda sensor having an output connected to the input of the processor; and
wherein the processor detects the fuel injection offset using the interval on a fresh air mass flow rate by comparing the interval on a fresh air mass flow rate with an interval on a fresh air mass flow rate derived from a lambda sensor.

4.  The inferential mechanism of claim 1, 2 or 3 further comprising:

a fresh air mass flow rate physical sensor having an output connected to the input of the processor; and
wherein the processor detects a fresh air mass flow rate physical sensor offset by comparing the interval on a fresh air mass flow rate sensed with a fresh air mass flow rate physical sensor.

5.  The inferential mechanism of any preceding claim, wherein the processor:

calculates an inlet pressure of the EGR valve based on a pressure from the pressure sensor; and
determines a control signal for the EGR valve based on the calculated inlet pressure of the EGR valve and outputs the control signal to the EGR valve.

6.  The inferential mechanism of claim 5, wherein the processor:

derives the calculated EGR valve inlet pressure using a turbine versus compressor power balance in view of an efficiency of a turbine connected to the output of the exhaust manifold and an efficiency of a compressor connected to the input of the intake manifold;
determines a compressor power balance based on a turbocharger angular velocity signal from a physical turbo speed sensor; and
derives a power of a turbocharger acceleration from a time derivative of the turbocharger angular velocity signal.

7. The inferential mechanism of claim 5 or 6, wherein the processor calculates the inlet pressure of the EGR valve as an interval of possible values based on intervals of turbocharger efficiency.

8. The inferential mechanism of claim 5, 6 or 7, wherein the processor detects an EGR valve blockage based on an upper bound on an EGR mass flow rate when determining that the EGR mass flow rate is not sufficient for a given valve opening angle.

9. A method for determining a pressure in an exhaust manifold of an engine having a turbocharger, the method comprising:

calculating a bound for an inlet pressure of an exhaust gas recirculation (EGR) valve connected to the exhaust manifold based on a maximum possible turbocharger efficiency of the turbocharger;
calculating an interval containing a fresh air mass flow rate based on the bound calculated for the inlet pressure;
detecting a fuel injection offset using the interval on a fresh air mass flow rate;
determining a control signal to adjust fuel injection in view of the fuel injection offset; and
outputting the control signal to a fuel injector in communication with the engine.

10. The method of claim 9, wherein the calculating the bound for the inlet pressure of the EGR valve includes calculating a lower bound for the inlet pressure of the EGR valve.

11. The method of claim 9 or 10, wherein the detecting the fuel injection offset using the interval on a fresh air mass flow rate includes comparing the interval on the fresh air mass flow rate with an interval on a fresh air mass flow rate derived from a lambda sensor in an exhaust gas stream from the engine.

12. The method of claim 9, 10 or 11 further comprising:

calculating an inlet pressure of the EGR valve based on a pressure from a pressure sensor situated in an intake manifold of the engine and in communication with the EGR valve;
determining a control signal for the EGR valve based on the inlet pressure calculated of the EGR valve; and
outputting the control signal to the EGR valve.

13. The method of claim 12, further comprising:

deriving the inlet pressure calculated for the EGR valve using a turbine versus compressor power balance in view of an efficiency of a turbine connected to an output of the exhaust manifold and an efficiency of a compressor connected to an input of the intake manifold;
determining a compressor power balance based on a turbocharger angular velocity signal from a physical turbo speed sensor; and
deriving a power of a turbocharger acceleration from a time derivative of the turbocharger angular velocity signal.

14. The method of claim 12 or 13, wherein the inlet pressure of the EGR valve is calculated as an interval of possible values based on intervals of turbo charger efficiency.

15. The method of claim 12, 13 or 14, further comprising: detecting an EGR valve blockage based on an upper bound on an EGR mass flow rate when determining that the EGR mass flow rate is not sufficient for a give valve opening angle.

FIG. 1

FIG. 2

FIG. 3

EP 3 674 535 A1

Europäisches
Patentamt

European
Patent Office

Office européen
des brevets

# EUROPEAN SEARCH REPORT

Application Number

EP 20 15 8536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 919 024 A1 (PEUGEOT CITROEN AUTOMOBILES SA [FR]) 23 January 2009 (2009-01-23) * page 2, line 10 - line 15; figures 1-2 * * page 4, line 1 - line 19 * * page 6, line 8 - page 7, line 18; claim 1 * ----- | 1-15 | INV. F02D41/00 F02D41/14 ADD. F02D41/24 F02D41/22 |
| A | EP 1 416 138 A2 (TOYOTA MOTOR CO LTD [JP]; DENSO CORP [JP]) 6 May 2004 (2004-05-06) * paragraph [0013]; figure 1 * * paragraph [0037] * * paragraph [0051] * * paragraph [0064] * * paragraph [0069] * * paragraph [0070] * * paragraph [0072] * * paragraph [0091] - paragraph [0098] * * paragraph [0101] - paragraph [0105] * * paragraph [0126] - paragraph [0127] * ----- | 1-15 | |
| A | FR 2 856 738 A1 (SIEMENS AG [DE]) 31 December 2004 (2004-12-31) * page 4, line 32 - page 9, line 31; claims 1-2; figures 1-2 * ----- | 1-15 | TECHNICAL FIELDS SEARCHED (IPC) F02D |
| A | EP 2 221 465 A1 (INST FRANCAIS DU PETROLE [FR]) 25 August 2010 (2010-08-25) * the whole document * ----- | 1-15 | |

The present search report has been drawn up for all claims

| Place of search | Date of completion of the search | Examiner |
|---|---|---|
| The Hague | 29 April 2020 | Rocabruna Vilardell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 8536

This annex lists the patent family members relating to the patent documents cited in  the above-mentioned European search report.
The members are as contained in the European Patent Office EDP file on
The European Patent Office is in no way liable for these particulars which are merely given for the purpose of information.

29-04-2020

| Patent document cited in search report | | | Publication date | Patent family member(s) | | | Publication date |
|---|---|---|---|---|---|---|---|
| FR 2919024 | A1 | | 23-01-2009 | NONE | | | |
| EP 1416138 | A2 | | 06-05-2004 | DE | 60320199 | T2 | 09-07-2009 |
| | | | | EP | 1416138 | A2 | 06-05-2004 |
| | | | | JP | 3861046 | B2 | 20-12-2006 |
| | | | | JP | 2004156458 | A | 03-06-2004 |
| | | | | US | 2004089061 | A1 | 13-05-2004 |
| FR 2856738 | A1 | | 31-12-2004 | DE | 10329330 | A1 | 10-03-2005 |
| | | | | FR | 2856738 | A1 | 31-12-2004 |
| EP 2221465 | A1 | | 25-08-2010 | EP | 2221465 | A1 | 25-08-2010 |
| | | | | FR | 2942506 | A1 | 27-08-2010 |

EPO FORM P0459

For more details about this annex : see Official Journal of the European Patent Office, No. 12/82